(19)

Europäisches Patentamt

European Patent Office

Office européen des brevets

(11) **EP 4 258 177 A1**

(12) **EUROPEAN PATENT APPLICATION**

(43) Date of publication:
**11.10.2023 Bulletin 2023/41**

(21) Application number: **22167452.6**

(22) Date of filing: **08.04.2022**

(51) International Patent Classification (IPC):
**G06N 3/08** *(2023.01)* **G06N 3/04** *(2023.01)*
**B60W 60/00** *(2020.01)* **G06V 20/58** *(2022.01)*

(52) Cooperative Patent Classification (CPC):
**G06N 3/084; B60W 60/0016; G06N 3/0464;**
**G06N 3/09; G06V 20/58;** G06N 3/086

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventors:
• **Schmidt, Frank**
**71229 Leonberg (DE)**
• **Sachse, Torsten**
**50672 Köln (DE)**

(54) **METHOD FOR INITIALIZING A NEURAL NETWORK**

(57)    Computer-implemented method (100) for training a neural network (60) wherein the neural network (60) is configured to determine an output signal (y) based on an input signal (x) and wherein training comprises training parameters of a depth-wise convolutional layer of the neural network (60), wherein the depth-wise convolutional layer is initialized based on values drawn from a pre-defined probability distribution, wherein a variance of the probability distribution is characterized by a reciprocal of a square root of a number of filters applied at each depth of an input of the depth-wise convolutional layer.

100

Fig. 1

EP 4 258 177 A1

## Description

The invention concerns a method for training a neural network, a training system, a computer program, and a machine-readable storage medium.

Prior art

He et al. "Delving Deep into Rectifiers: Surpassing Human-Level Performance on ImageNet Classification", 2015, https://arxiv.org/pdf/1502.01852.pdf discloses a method for initializing weights of a neural network before training.
Glorot and Bengio "Understanding the difficulty of training deep feedforward neural networks", 2010, AISTATS, http://jmlr.org/proceedings/papers/v9/glorot10a/glorot10a.pdf discloses a method for initializing weights of neural networks before training.

Technical background

Neural networks serve as backbones for solving different tasks across various fields of technology. Neural networks make use of data in a process known as training, wherein during training a neural network is adapted to the data at hand (i.e., the training data) to solve the desired task. The tasks may include classification, regressions analysis, and various sub-forms of the aforementioned paradigms, e.g., object detection or semantic segmentation.
The efficiency or even the ability of training such a network often depends on the initialization of the involved parameters. A common approach is the approach introduced by Xavier Glorot and Yoshua Bengio, which is sometimes referred to as Glorot initialization or Xavier initialization. Here, the parameters of a linear layer (i.e., layers performing linear transformations such as fully connected layers or convolutional layers) are initialized with random values drawn from a random distribution with mean 0 and variance $V$, where $V$ depends on the specific layer.
Initialization parameters of a neural network to suitable values is a recurring problem in machine learning as these models are typically trained by choosing a starting point for the parameters (i.e., the initialization) and then iteratively updating the parameters according to some loss function. Typical methods for these approaches are gradient-based optimization such as stochastic gradient descent or optimization methods based on evolutionary or genetic algorithms.
The initialization hence serves a crucial goal in training a neural network. If an initialization of the parameters is unsuitable, training may converge slowly or even not at all.
This invention proposes a new approach for initialization parameters (also known as weights) of a neural network.

Disclosure of the invention

In a first aspect, the invention concerns a Computer-implemented method for training a neural network wherein the neural network is configured to determine an output signal based on an input signal and wherein training comprises training parameters of a depth-wise convolutional layer of the neural network, wherein the depth-wise convolutional layer is initialized based on values drawn from a predefined probability distribution, wherein a variance of the probability distribution is characterized by a reciprocal of a square root of a number of filters applied at each depth of an input of the depth-wise convolutional layer.
In the following, the depth-wise convolutional layer will also be referred to in short as simply "the layer".
The output signal may be determined based on the input signal by providing the input signal to the neural network, which then in turn forwards the input signal through its layers to determine the output signal. The layer may especially be considered to be placed along this path of information. The layer may, for example, be a first layer of the neural network, thereby taking the input signal as input and providing an output of the layer to other layers of the neural network. Alternatively, the layer may be a hidden layer of the neural network, i.e., a layer that receives input from another layer of the neural network. The layer may be placed at the end of the neural network, thereby serving as an output layer. The output of the layer may hence also be provided as output signal of the neural network. All of these embodiments are considered as falling under the term "determine an output signal based on an input signal".
The layer may especially be used as part of a depth-wise separable convolution.
The layer hence plays a deciding role for determining the output signal of the neural network. During training, the parameters or some parameters of the layer may be adapted in order to achieve a desired behavior of the neural network, e.g., to allow for the neural network to determine an output signal that is desired given an input signal.
The output signal may, for example, characterize a classification and/or result of a regression analysis given the input signal. In terms of statistics, the input signal may serve as independent variable wherein the output signal may serve as dependent variable. Training may be conducted in a supervised manner, e.g., by providing a loss function that shall be minimized, wherein the loss function is configured to characterize a difference or dissimilarity between an output signal determined by the neural network for an input signal and a desired signal with respect to the input signal. Training may, however, also be conducted in a semi-supervised or unsupervised fashion. For example, the neural network may be configured as a generative adversarial network or a normalizing flow and training may be conducted with known methods for these kinds of models.

Preferably, the input signal characterizes a measurement obtained from a sensor.

The input signal may hence be a sensor signal or comprise a sensor signal, for example, if the input signal comprises multiple signals. The sensor may be considered to carry out a measurement and provided the measurement to the neural network, which in turn determines an output signal based on the sensor signal. If the input signal characterizes a sensor signal, the output signal may hence be considered an indirect measurement obtained based on the direct measurement of the sensor, i.e., the input signal.

The measurement obtained from the sensor, i.e., the sensor signal, may comprise different kinds of data. The sensor may, for example, be a camera, a lidar sensor, a radar sensor, an ultrasonic sensor, a thermal camera, a piezo sensor, or a hall sensor.

The sensor signal may also comprise a plurality of sensor signals, e.g., from multiple sensors of the same type and/or multiple sensors from different types.

Preferably, the neural network is hence configured to accept an input signal as input, wherein the input signal characterizes a sensor signal, and provide an output signal that characterizes a classification and/or regression result and/or a probability density value (e.g., in the case of the neural network being a normalizing flow) of the input signal. A regression result may be understood as a result of a regression analysis using the input signal as independent variable.

Training of the neural network may be conducted by means of backpropagation and gradient descent, e.g., stochastic gradient descent. Alternatively, the neural network may also be trained using an evolutionary algorithm or a genetic algorithm.

For training, the neural network is initialized, wherein initializing the neural network may be considered to setting the values of parameters of the neural network to some specific value. The parameters of the neural network are organized in layers, which means that initializing the neural network can also be considered as initializing layers of the neural network. For initialization, only a subset of parameters of the neural network and/or a subset of parameters of the layers may be initialized. Preferably, all parameters of the neural network are initialized. Initialization may preferably be conducted before training or when restarting the training of the neural network.

For initialization of the layer, values are drawn from the predefined probability distribution and the parameters of the layer may be set according to the drawn values. Preferably, the values are used as parameters, but other approaches may be chosen as. For example, the values may be offset by a predefined value before being used as parameters.

The inventors found that initializing the parameters of the layer according to the reciprocal of the square root of the product of the number of inputs of the layer and number of outputs of the layer leads to a faster converge of training, especially if the number of inputs and number of outputs differs considerably, e.g., by at least an order of magnitude. Advantageously, the speed up in convergence is due to the proposed initialization allowing the layer to acquire an upscaling factor of exactly 1. That is, the expected factor of values in the input and values in the output of the layer is exactly 1. Advantageously, this restricts values of gradients determined for the layer to suitable values, i.e., the gradients are not too small (i.e., not close to vanishing gradients) and not too large (i.e., not close too exploding gradients).

As training is always conducted with a finite amount of time, a faster training leads to the neural network being able to be trained with more data in the finite amount of time, which in turn leads to a better generalization of the neural network.

Preferably, the variance is determined according to the formula:

$$V = \frac{1}{K_w \cdot K_h \cdot \sqrt{k}},$$

wherein $K_w$ is a kernel width of filters of the convolutional layer, $K_h$ is a kernel height of filters of the convolutional layer, and $k$ is the number of filters applied at each depth of the input of the depth-wise the convolutional layer.

Preferably, it is also possible that the neural network comprises a plurality of depth-wise convolutional layers, wherein each layer of the plurality of depth-wise convolutional layers is initialized according to any one of the embodiments listed above.

In preferred embodiments, the predefined probability distribution is a Normal distribution. Preferably, the predefined probability distribution has an expected value of zero.

In another aspect, the invention concerns a computer-implemented method for determining an output signal based on an input signal, wherein the method comprises the steps of:

- Obtaining a neural network that has been trained with the method according to any one embodiment listed previously;
- Determining the output signal based on the input signal by means of the obtained neural network.

Obtaining the neural network that has been trained may be considered as actually performing the training method. Alternatively, the neural network may also be obtained from some other source, wherein the source provides the neural network after training according to a previously presented embodiment. The neural network may, for example, be trained by an entity and then provided by the entity through, e.g., online download.

Advantageously, this aspect allows for determining a better output signal as the neural network has been trained with the improved method discussed above.

The improved training method leads to an increase in generalization ability. In other words, the neural network is capable of predicting a desired output signal more accurately.

The invention further concerns a computer-implemented neural network, wherein the neural network is trained with the method according to the training method presented earlier.

The neural network may preferably be used as part of a control system for controlling a technical system. The invention hence also concerns a control system, wherein the control system is configured to use the neural network for determining a control signal for controlling an actuator and/or a display of a technical system.

Embodiments of the invention will be discussed with reference to the following figures in more detail. The figures show:

Figure 1   schematically a method for training a neural network;
Figure 2   a training system for training the neural network;
Figure 3   a control system;
Figure 4   the control system controlling an at least partially autonomous robot;
Figure 5   the control system controlling a manufacturing machine;
Figure 6   the control system controlling an automated personal assistant;
Figure 7   the control system controlling an access control system;
Figure 8   the control system controlling a surveillance system;
Figure 9   the control system controlling an imaging system;
Figure 10  the control system controlling a medical analysis system.

Description of the embodiments

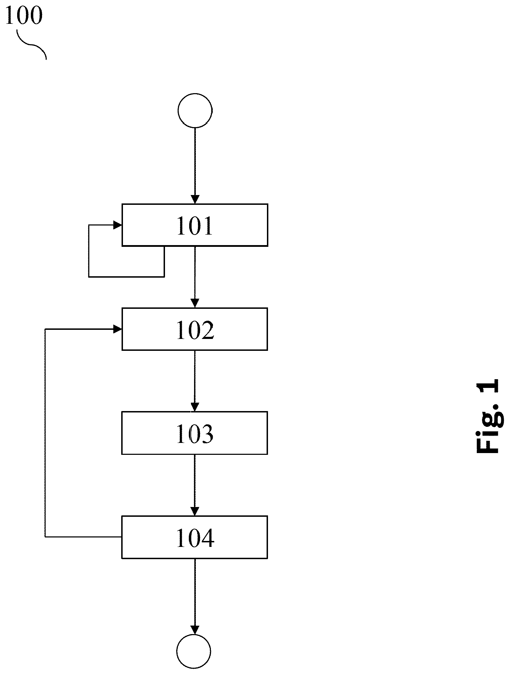

Figure 1 shows an embodiment of a method (100) for training a neural network comprising at least one depth-wise convolutional layer. In a first step (101), parameters of the neural networks are initialized. The parameters of the neural network are organized in layers and the parameters of the depth-wise convolutional layer are initialized with respect to the number of filters applied at each depth of the input of the depth-wise the convolutional layer. Preferably, all layers comprising parameters of the neural network are initialized. That is, the step (101) may be repeated for each depth-wise convolutional layer or for some depth-wise convolutional layers of the neural network.

In the first step (101), the values for the parameters of the depth-wise convolutional layer are preferably drawn from a Normal distribution, wherein the Normal distribution has an expected value of preferably 0 and variance of

$$V = \frac{1}{K_h \cdot K_w \cdot \sqrt{k}},$$

wherein $K_w$ is a kernel width of filters of the convolutional layer, $K_h$ is a kernel height of filters of the convolutional layer, and $k$ is the number of filters applied at each depth of the input of the depth-wise the convolutional layer.

After completing the first step (101) or the first steps, a training sample may then be forwarded through the neural network in a second step (102) of the method. In a third step (103) a gradient with respect to the parameters of the neural network may be determined, e.g., by backpropagation. In a fourth step (104)of the method, the gradient may then be used in order to determine new parameters of the neural network. the gradient may be used in a first order gradient descent method such as stochastic gradient descent or in second order gradient descent methods.

The second step (102), third step (103), and the fourth step (104) maybe you repeated iteratively until a desired amount of iterations is achieved or until a predefined criterion is fulfilled, e. g., a loss value with respect to a training data set is at or below a predefined threshold or a loss value with respect to a validation data set is at or below a predefined threshold. If the desired amount of iterations is achieved or if the predefined criteria is fulfilled the method ends.

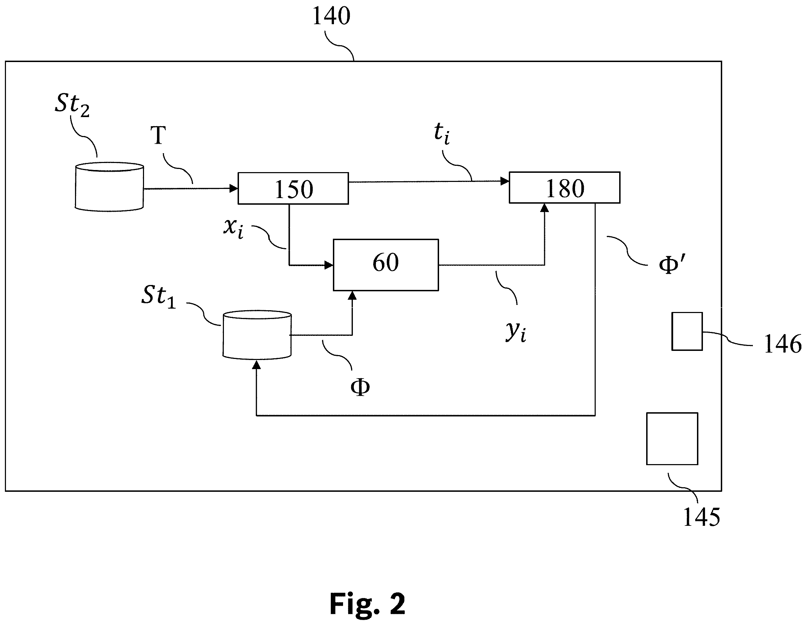

Figure 2 shows an embodiment of a training system (140) for training the neural network (60) by means of a training data set (T). Before training, the neural network (60) is initialized according to the embodiment of Figure 1. The training data set (T) comprises a plurality of input signals ($x_i$) which are used for training the neural network (60), wherein the training data set (T) further comprises, for each input signal ($x_i$), a desired output signal ($t_i$) which corresponds to the input signal ($x_i$) and characterizes a classification of the input signal ($x_i$) and/or a desired regression result with respect ot the input signal ($x_i$).

For training, a training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the neural network (60). The neural network (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters (Φ') for the neural network (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the neural network (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the neural network (60).

Furthermore, the training system (140) may comprise at least one processor (145) and at least one machine-readable storage medium (146) containing instructions which, when executed by the processor (145), cause the training system (140) to execute a training method according to one of the aspects of the invention.

In further embodiments (not shown), training of the neural network (60) may also happen unsupervisedly. The neural network may, for example, be a normalizing flow and the loss function may be based solely on the output of the neural network (60) for the training input signal ($x_i$). However, except for the desired inputs output signal ($t_i$) the rest of the training system (140) does not need to be changed.

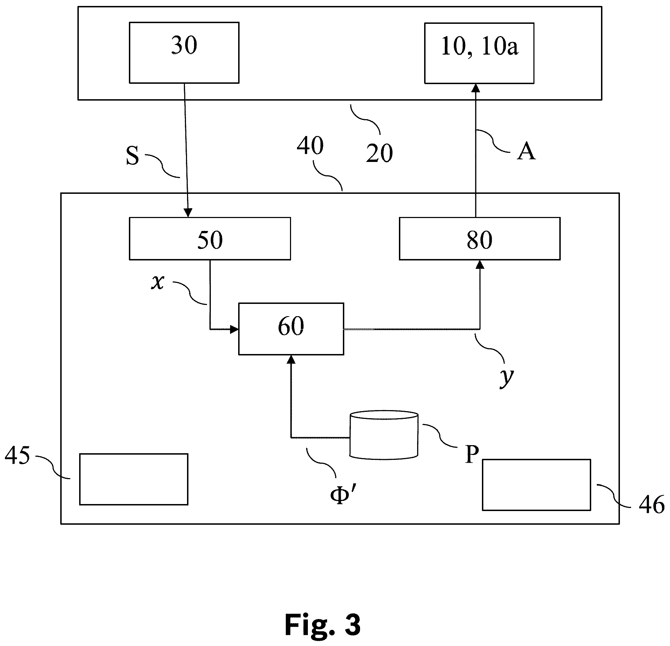

Figure 3 shows an embodiment of an actuator (10) in its environment (20). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (x). In other words, the input signal (x) is provided in accordance with the sensor signal (S).

The input signal (x) is then passed on to the neural network (60). The neural network has preferably been trained with the training system (140) according to Figure 2. Alternatively, the neural network (60) may also be obtained from an outside source, e.g., by means of downloading the neural network (60) from the internet.

The neural network (60) is parametrized by parameters ($\Phi$), which are stored in and provided by a parameter storage ($St_1$).

The neural network (60) determines an output signal (y) from the input signals (x). The output signal (y) comprises information that assigns one or more labels and/or real values to the input signal (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

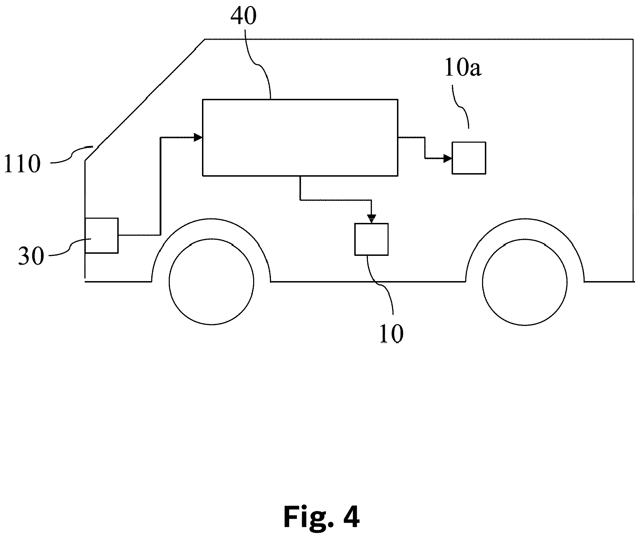

Figure 4 shows an embodiment in which the control system (40) is used to control an at least partially autonomous robot, e.g., an at least partially autonomous vehicle (110).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (110). The input signal (x) may hence be understood as an input image and the neural network (60) as an image classifier.

The neural network (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (110), may be given by a brake, a propulsion system, an engine, a drivetrain, or a steering of the vehicle (110). The control signal (A) may be determined such that the actuator (10) is controlled such that vehicle (110) avoids collisions with the detected objects. The detected objects may also be classified according to what the neural network (60) deems them most likely to be, e.g., pedestrians or trees, and the control signal (A) may be determined depending on the classification.

Alternatively or additionally, the control signal (A) may also be used to control the display (10a), e.g., for displaying the objects detected by the neural network (60). It can also be imagined that the control signal (A) may control the display (10a) such that it produces a warning signal, if the vehicle (110) is close to colliding with at least one of the detected objects. The warning signal may be a warning sound and/or a haptic signal, e.g., a vibration of a steering wheel of the vehicle (110).

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

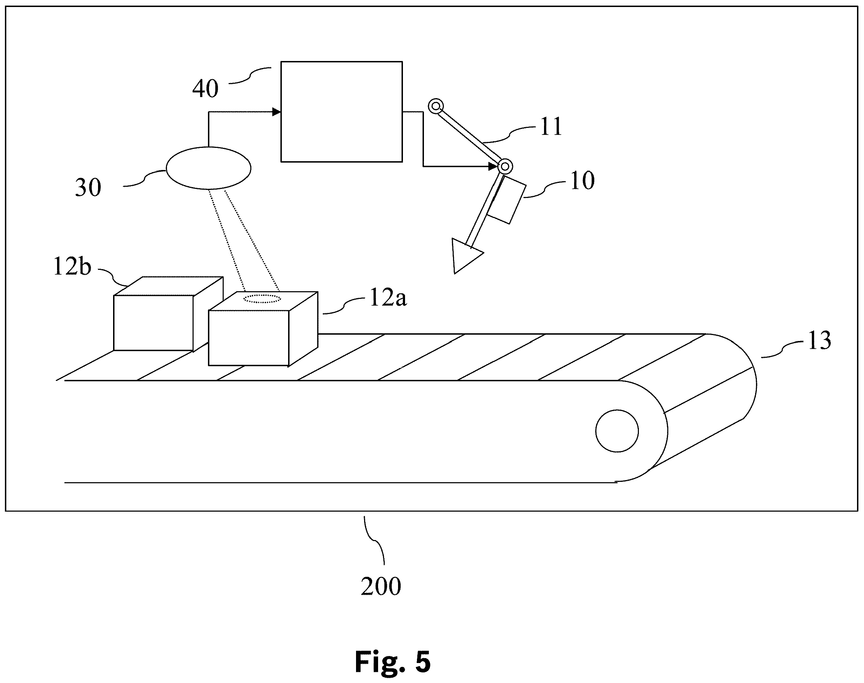

Shown in figure 5 is an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The neural network (60) may hence be understood as an image classifier.

The neural network (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the neural network (60) classifies, whether the manufactured product is broken or exhibits a defect. The actuator (10) may then be controlled as to remove the manufactured product from the transportation device.

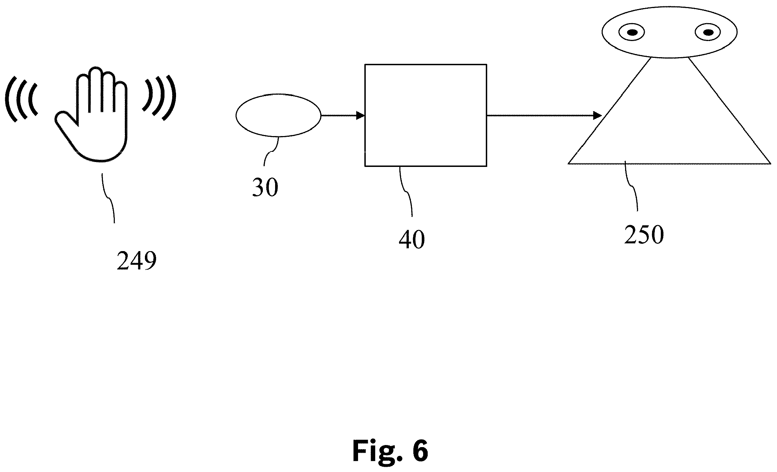

Figure 6 shows an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the neural network (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the neural network (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave or a dishwasher.

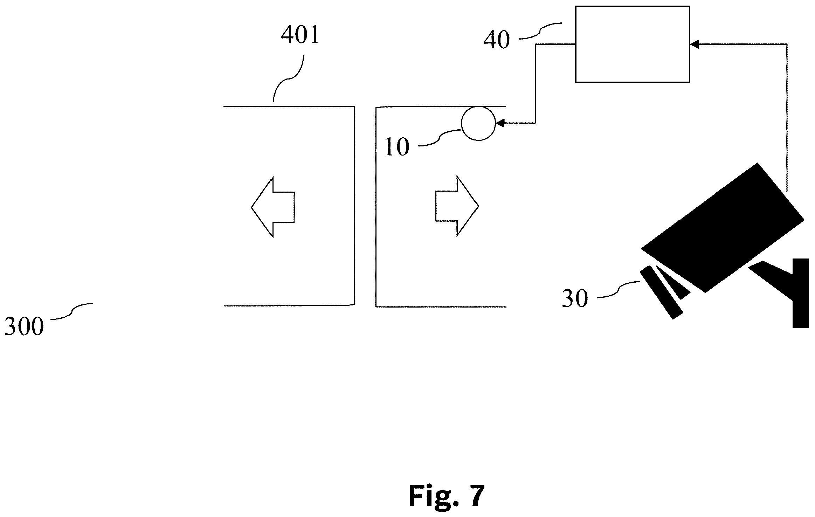

Shown in figure 7 is an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The neural network (60) may hence be understood as an image classifier.

The neural network (60) may be configured to classify an identity of the person, e.g., by matching the detected face of the person with other faces of known persons stored in a database, thereby determining an identity of the person. The control signal (A) may then be determined depending on the classification of the neural network (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

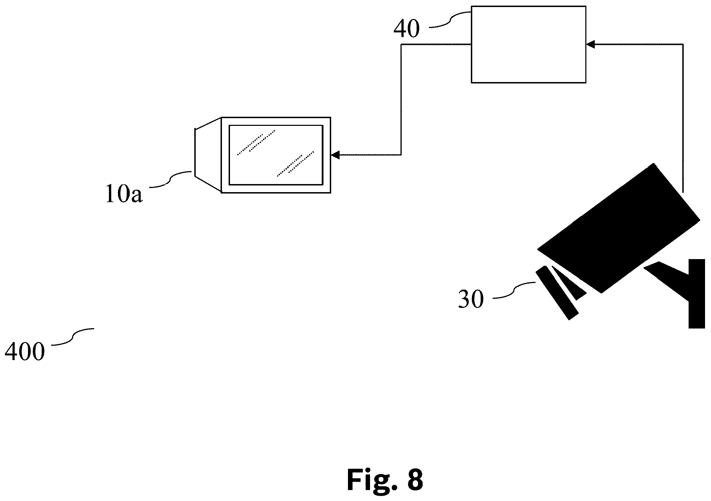

Shown in figure 8 is an embodiment in which the control system (40) controls a surveillance system (400). This embodiment is largely identical to the embodiment shown in figure 7. Therefore, only the differing aspects will be described in detail. The sensor (30) is configured to detect a scene that is under surveillance. The control system (40) does not necessarily control an actuator (10), but may alternatively control a display (10a). For example, the neural network (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the neural network (60).

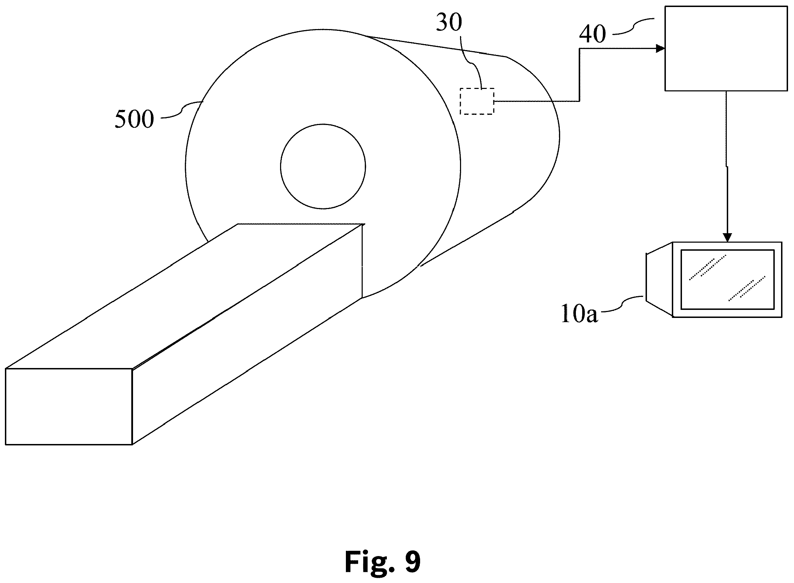

Shown in figure 9 is an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The neural network (60) may then determine a classification of at least a part of the sensed image. The at least part of the image is hence used as input image (x) to the neural network (60). The neural network (60) may hence be understood as an image classifier.

The control signal (A) may then be chosen in accordance with the classification, thereby controlling a display (10a). For example, the neural network (60) may be configured to detect different types of tissue in the sensed image, e.g., by classifying the tissue displayed in the image into either malignant or benign tissue. This may be done by means of a semantic segmentation of the input image (x) by the neural network (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the neural network (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

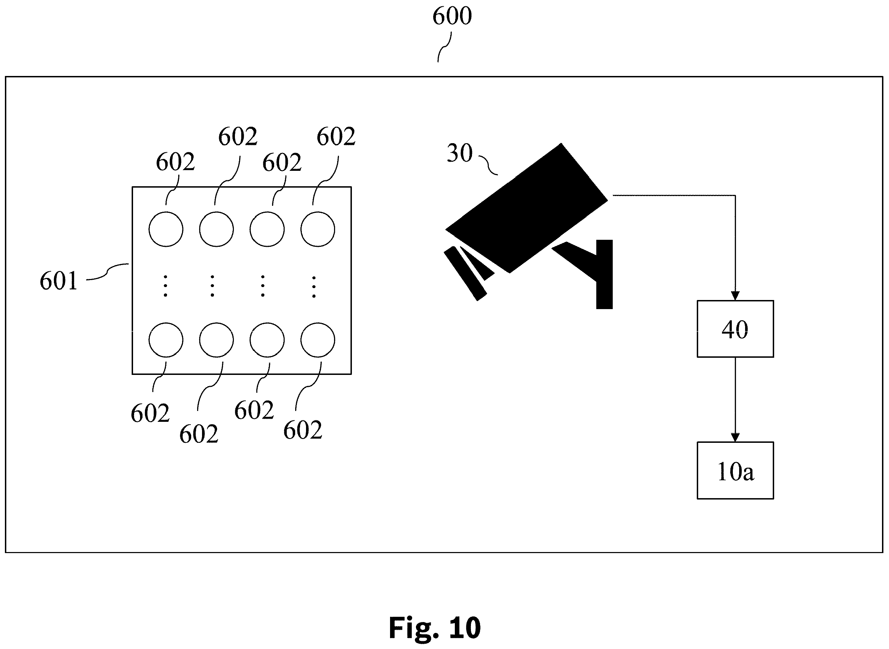

Shown in figure 10 is an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor. The neural network (60) may hence be understood as an image classifier.

The neural network (60) is configured to classify a result of the specimen based on an input image (x) of the microarray supplied by the sensor (30). In particular, the neural network (60) may be configured to determine whether the microarray (601) indicates the presence of a virus in the specimen.

The control signal (A) may then be chosen such that the display (10a) shows the result of the classification.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method (100) for training a neural network (60) wherein the neural network (60) is configured to determine an output signal (y) based on an input signal (x) and wherein training comprises training parameters of a depth-wise convolutional layer of the neural network (60), wherein the depth-wise convolutional layer is initialized based on values drawn from a predefined probability distribution, wherein a variance of the probability distribution is **characterized by** a reciprocal of a square root of a number of filters applied at each depth of an input of the depth-wise convolutional layer.

2. Method (100) according to claim 1, wherein the input signal (x) characterizes a measurement obtained from a sensor (30).

3. Method (100) according to claim 1 or 2, wherein the variance is determined according to the formula:

$$V = \frac{1}{K_h \cdot K_w \cdot \sqrt{k}},$$

wherein $K_w$ is a kernel width of filters of the convolutional layer, $K_h$ is a kernel height of filters of the convolutional layer, and $k$ is the number of filters applied at each depth of the input of the depth-wise the convolutional layer.

4. Method (100) according to any one of the previous claims, wherein the predefined probability distribution is a Normal distribution.

5. Method (100) according to claim 4, wherein the pre-

defined probability distribution has an expected value of zero.

6. Computer-implemented method for determining an output signal (y) based on an input signal (x), wherein the method comprises the steps of:

    • Obtaining a neural network (60) that has been trained with the method according to any one of the claims 1 to 5;
    • Determining the output signal (y) based on the input signal (x) by means of the obtained neural network (60).

7. Computer-implemented neural network (60), wherein the neural network (60) is trained with the method according to any one of the claims 1 to 5.

8. Control system (40), wherein the control system (40) is configured to use the neural network (60) according to claim 7 for determining a control signal (A) for controlling an actuator (10) and/or a display (10a) of a technical system (110, 200, 250, 300, 400, 500, 600)

9. Training system (140), which is configured to carry out the training method according to any one of the claims 1 to 5

10. Computer program that is configured to cause a computer to carry out the method according to any one of the claims 1 to 6 with all of its steps if the computer program is carried out by a processor (45, 145).

11. Machine-readable storage medium (46, 146) on which the computer program according to claim 10 is stored.

Fig. 1

**Fig. 2**

**Fig. 3**

Fig. 4

**Fig. 5**

Fig. 6

Fig. 7

40

10a

400

30

**Fig. 8**

Fig. 9

**Fig. 10**

Europäisches
Patentamt

European
Patent Office

Office européen
des brevets

# EUROPEAN SEARCH REPORT

Application Number

EP 22 16 7452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "SCALING LAWS FOR THE PRINCIPLED DESIGN, INI- TIALIZATION, AND PRECONDITIONING OF RELU NET- WORKS", , 25 September 2019 (2019-09-25), XP055957616, Retrieved from the Internet: URL:https://openreview.net/pdf?id=BJedt6VK PS [retrieved on 2022-09-05] * abstract * * 1. INTRODUCTION * * 3.2 ASSUMPTIONS * * 6 PRECONDITIONING OF NEURAL NETWORKS VIA INITIALIZATION * * 8 EXPERIMENTAL RESULTS * * A GR SCALING DERIVATION * ----- | 1-11 | INV. G06N3/08 G06N3/04 B60W60/00 G06V20/58 |
| A | EP 3 965 009 A1 (BOSCH GMBH ROBERT [DE]) 9 March 2022 (2022-03-09) * abstract; figure 2 * * paragraph [0051] * ----- | 1-11 | TECHNICAL FIELDS SEARCHED (IPC) G06N B60W G06K G06V |

The present search report has been drawn up for all claims

| Place of search | Date of completion of the search | Examiner |
|---|---|---|
| The Hague | 5 September 2022 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 7452

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2022

| Patent document cited in search report | | Publication date | Patent family member(s) | | Publication date |
|---|---|---|---|---|---|
| EP 3965009 | A1 | 09-03-2022 | CN | 114239671 A | 25-03-2022 |
| | | | EP | 3965009 A1 | 09-03-2022 |
| | | | US | 2022076096 A1 | 10-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE et al.** *Delving Deep into Rectifiers: Surpassing Human-Level Performance on ImageNet Classification,* 2015, https://arxiv.org/pdf/1502.01852.pdf

- **GLOROT ; BENGIO.** Understanding the difficulty of training deep feedforward neural networks. *AIST-ATS,* 2010, http://jmlr.org/proceedings/papers/v9/glorot10a/glorot10a.pdf